Europäisches Patentamt

European Patent Office

Office européen des brevets

(11) Numéro de publication: **0 092 457**
**A1**

## (12) DEMANDE DE BREVET EUROPEEN

(21) Numéro de dépôt: **83400692.6**

(22) Date de dépôt: **01.04.83**

(51) Int. Cl.³: **B 27 K 3/50,** A 01 N 25/04

(30) Priorité: **06.04.82 FR 8205945**
**09.03.83 FR 8303846**

(43) Date de publication de la demande: **26.10.83**
**Bulletin 83/43**

(84) Etats contractants désignés: **AT BE CH DE FR GB LI LU NL SE**

(71) Demandeur: **SOCIETE FRANCAISE HOECHST Société anonyme dite:, 3, avenue du Général de Gaulle, F-92800 Puteaux (FR)**

(72) Inventeur: **Soreau, Michel, 4 Jardins du Mont Griffard, F-95160 Montmorency (FR)**
Inventeur: **Siegel, Daniel, 4, rue des Sablières, F-78360 Montesson (FR)**

(74) Mandataire: **Rinuy, Guy et al, Cabinet Rinuy et Santarelli 14, Avenue de la Grande Armée, F-75017 Paris (FR)**

(54) Concentré d'agents de protection et/ou de conservation du bois permettant la préparation de microémulsions aqueuses destinées au traitement du bois et émulsions obtenues à partir d'un tel concentré.

(57) Un concentré selon l'invention comprend, pondéralement:

— de 10 à 50% de pesticide (s) connu (s) constitué (s) nécessairement d'un mélange d'un ou plusieurs insecticide (s) connu (s) insoluble (s) dans l'eau et d'un ou plusieurs fongicide (s) connu (s), soluble (s) ou insoluble (s) dans l'eau

— et au moins 20% d'une composition émulsifiante constituée pour une partie principale par un ou plusieurs émulsifiant (s) anionique (s) connu (s) appartenant à la classe des sels d'acides carboxyliques en $C_{10}$ ou plus et pour une partie secondaire d'un ou plusieurs coémulsifiant (s), miscible (s) à l'eau appartenant à la classe des éthers de polyols.

EP 0 092 457 A1

ACTORUM AG

1.

"Concentré d'agents de protection et/ou de conservation du bois permettant la préparation de microémulsions aqueuses destinées au traitement du bois et émulsions obtenues à partir d'un tel concentré".

La présente invention concerne un concentré permettant la préparation de microémulsions aqueuses destinées au traitement du bois.

La protection du bois contre les insectes xylophages et/ou les champignons est ordinairement réalisée par imprégnation avec des produits pesticides largement décrits dans la littérature tels que des esters phosphoriques ou thiophosphoriques, des carbamates, des hydrocarbures chlorés, des dérivés du pyrèthre, des phénols, des fongicides organométalliques, etc.

Habituellement, on choisit des pesticides insolubles dans l'eau car ils sont très souvent plus actifs et surtout, une fois absorbés par le bois, ils sont plus difficilement éliminés ou détruits par les intempéries que leurs homologues hydrosolubles. Mais par contre, lors de leur application, il se pose le problème de leur solubilisation aisée et la moins onéreuse possible, d'autant plus que certains d'entre eux de par leur constitution sont sensibles à l'hydrolyse tels que les dérivés chlorés, le "Chlordane" par exemple. On a proposé de les appliquer sous forme d'émulsions huile dans l'eau obtenues par mélange, avec de l'eau, d'une solution organique des pesticides appropriés, insolubles dans l'eau, en présence d'émulsifiants non ioniques. Les émulsions ainsi préparées sont des macroémulsions laiteuses dont la granulométrie des globules dispersés est généralement élevée et de ce fait n'autorise pas un traitement du bois donnant toute satisfaction.

Or, la Demanderesse a constaté que si l'on remplaçait ces émulsifiants non ioniques par une composition émulsifiante constituée, pour une partie principale supérieure à 55 %, d'un ou plusieurs émulsifiants anioniques appartenant à la classe des sels d'acides carboxyliques en $C_{10}$ et plus et, pour une partie secondaire inférieure à 45 %, d'un ou plusieurs coémulsifiants, miscibles à l'eau, appartenant à la classe des éthers de polyols, on pouvait obtenir facilement des microémulsions huile dans

2.

l'eau à phase continue aqueuse ne présentant pas cet aspect laiteux et dont les autres propriétés telles que notamment la stabilité étaient améliorées. Ce résultat est d'autant plus surprenant qu'il était admis jusqu'à présent que l'emploi d'émulsifiants anioniques ne permettait pas l'obtention de microémulsions stables de pesticides chlorés, (M. PRINCE, Microémulsion, theory and practise, pages 29-30, Academic Press, Inc., 1977, New-York).

Ainsi, l'invention couvre des microémulsions aqueuses de type huile dans l'eau, à phase continue aqueuse, convenant pour la protection du bois contre les insectes xylophages et/ou les champignons, obtenues par dilution à l'eau de concentrés prêts à l'emploi. Ces concentrés, objet de l'invention, comprennent pondéralement :

- de 10 à 50 % de pesticide (s) connu (s) constitué (s) nécessairement d'un mélange en proportions variables d'un ou plusieurs insectidide (s) connu (s) insoluble (s) dans l'eau et d'un ou plusieurs fongicide (s) connu (s), soluble (s) ou insoluble (s) dans l'eau ;

et au moins 20 % d'une composition émulsifiante constituée pour une partie principale supérieure à 55 % par un ou plusieurs émulsifiant (s) anionique (s) connu (s) appartenant à la classe des sels d'acides carboxyliques en $C_{10}$ ou plus et pour une partie secondaire inférieure à 45 % d'un ou plusieurs coémulsifiant (s) miscible (s) à l'eau, appartenant à la classe des éthers de polyols tels que l'éther monobutylique de l'éthylèneglycol, l'éther monobutylique du diéthylèneglycol.

Outre les constituants ci-dessus, les concentrés selon l'invention peuvent contenir les constituants habituels de tels concentrés comme, par exemple, des résines de fixation connues telles des résines alkydes et/ou des résines dérivées de la colophane, des colorants, des plastifiants, des agents tampon de pH, des complexants, des solvants organiques, de l'eau, des bases minérales ou organiques telle que des alcanolamines. Parmi les solvants utilisables, on peut citer notamment des alcanols tels que le cyclohexanol, des cétones aliphatiques, des esters,

3.

des amides, des hydrocarbures aliphatiques ou aromatiques, saturés ou insaturés, cycliques ou non.

Suivant un mode de réalisation avantageux, un concentré selon l'invention comprendra de 10 à 50 % en poids de pesticide (s) tels que définis ci-dessus, au moins 45 % en poids de la composition émulsifiante telle que définie également ci-dessus, le complément à 100 % étant constitué par les autres additifs habituels tels que définis ci-dessus.

Plus précisément, la composition émulsifiante contiendra pondéralement au moins 40 % d'un ou plusieurs émulsifiant (s) anionique (s) connus tels que définis précédemment et au moins 10 % d'un ou plusieurs coémulsifiant (s), miscible (s) à l'eau tels que définis précédemment.

Suivant une variante, un concentré selon l'invention pourra comprendre de 10 à 50 % en poids de pesticide (s) tels que définis ci-dessus, au moins 20 % en poids de la composition émulsifiante telle que définie également ci-dessus, au moins 10 % en poids d'eau et au moins 0,5 % en poids d'une ou plusieurs résines de fixation propres à fixer le ou les agents de traitement sur le bois, outre les autres additifs habituels tels que définis précédemment.

Plus précisément, la composition émulsifiante contiendra au moins 20 % en poids d'un ou plusieurs émulsifiants anioniques tels que définis précédemment et au moins 10 % d'un ou plusieurs coémulsifiants miscibles à l'eau tels que définis également ci-dessus.

La Demanderesse a en effet constaté que si les quantités d'eau présentes dans le concentré sont trop faibles (par exemple de l'ordre de 4 %), on obtenait dans certains cas très particuliers, notamment lorsque sa dilution est réalisée avec des eaux dures, des micro-émulsions aqueuses ne présentant pas toute la stabilité dans le temps attendue. Ainsi, à la suite de travaux effectués sur ce sujet, elle a découvert de façon imprévue qu'en adaptant de manière appropriée les différents

4.

composants, il est possible d'obtenir un concentré aqueux qui, après dilution à l'eau, conduit à des microémulsions stalbes et efficaces dans la protection du bois avec la particularité supplémentaire de permettre une dilution avec des eaux de ville de quelconque origine, tant douces que dures, sans influencer la stabilité et l'efficacité de la microémulsion en résultant.

Suivant d'autres caractéristiques, la combinaison d'un ou plusieurs émulsifiant (s) anionique (s) de la classe des sels d'acides carboxyliques en $C_{10}$ ou plus avec un ou plusieurs coémulsifiant (s) miscible (s) à l'eau appartenant à la classe des éthers de polyols autorise l'obtention de microémulsions aqueuses stables, du type huile dans l'eau de pesticides connus, solubles ou insolubles dans l'eau.

L'insecticide ou la combinaison d'insecticides insoluble (s) dans l'eau est (sont) choisi (s) parmi les insecticides organiques connus tels ceux cités dans ULLMANNS, Encyklopädie der technischen Chemie, 4e édition, vol. 13, pages 209-263, 1977, Verlag Chemie - New York.

Le fongicide ou la combinaison de fongicides, soluble (s) ou insoluble (s) dans l'eau est (sont) choisi (s) parmi les fongicides cités dans ULLMANNS, Encyklopädie der technischen Chemie, 4e édition, Vol. 12, pages 1-12, 1977 - Verlag Chemie New-York. Préférentiellement, le ou les fongicides utilisé (s) est (sont) choisi (s) parmi les fongicides connus appartenant à la classe des phénols, des phénolates chlorés et des fongicides organométalliques.

Ainsi qu'il a été dit précédemment, le ou les émulsifiants utilisable (s), de type anionique, est (sont) choisi (s) parmi les sels alcalins, alcalino-terreux, d'ammonium ou d'amines d'acides carboxyliques comportant au moins 10 atomes de carbone. Les sels des acides oléiques, naphténiques ou des N-acyl-sarcosines sont particulièrement appropriés ; préférentiellement, l'agent basique salifiant est une alcanolamine. Comme N-acyl-sarcosine, on peut citer la N-oléoylsarcosine (oléoylsarcoside).

5.

Le concentré selon l'invention est obtenu par simple mélange de ces constituants, au besoin à chaud, pour accélérer la dissolution. Il se présente sous forme d'un liquide d'aspect huileux, transparent et parfaitement stable au stockage entre -5 et 50°C.

Selon une variante avantageuse, le ou les émulsifiants choisis sont préparés in situ par salification du ou des acides correspondants avec l'agent basique choisi. Préférentiellement, cet agent basique est une alcanolamine telle que la monoéthanolamine, la diéthanolamine. Il est, dans certains cas, avantageux d'introduire un léger excès d'agent basique lors de la salification, de manière à obtenir des émulsions présentant un pH légèrement alcalin.

Suivant une forme de réalisation particulièrement avantageuse, le concentré selon l'invention contient une résine de fixation. Cette ou ces résines de fixation sont notamment l'amidon, la carboxyméthylcellulose, la colophane, ou des esters de colophane, la gomme arabique, l'alcool polyvinylique, l'acide humique, les résines glycérophtaliques, les résines dites d'hydrocarbures composées de bas polymères d'hydrocarbures insaturés aliphatiques et/ou aromatiques issus de craquage de fractions pétrolières riches en indène. Grâce à l'emploi de cette résine, on obtient une meilleure fixation des agents actifs et la formation d'un film fonction de la proportion de résine introduite.

Les microémulsions obtenues à partir du concentré selon l'invention et destinées à la protection du bois contre les insectes et/ou les champignons, objet aussi de l'invention, sont préparées par simple addition, sous agitation, du concentré contenant les pesticides choisis dans la masse d'eau désirée. Elles sont caractérisées par un aspect translucide à transparent.

Ce type d'émulsion est communément appelé microémulsion ou plus rarement solution micellaire, par opposition à macroémulsion qui présente un aspect laiteux. Les micro-émulsions selon l'invention sont aussi caractérisées par une bonne stabilité dans le temps ; elles

6.

présentent aussi une viscosité et une tension superficielle très faibles. Ces caractéristiques : microémulsion, bonne stabilité, faible viscosité, tension superficielle peu élevée, confèrent aux émulsions selon l'invention d'excellentes propriétés applicatives pour le traitement du bois.

Les microémulsions selon l'invention contiennent le concentré selon l'invention et de l'eau dans un rapport pondéral respectif pouvant varier de 5/95 à 30/70, de préférence de 10/90 à 25/75.

Pour certains traitements, on ajustera la dilution du concentré de manière à obtenir une microémulsion stable, mais instable dès qu'une partie de l'eau de dilution sera évaporée. Ainsi, lors du traitement du bois, les matières actives, après avoir pénétré dans le bois à l'état de microémulsion, se sépareront et se déposeront dès qu'une partie seulement de l'eau s'évaporera. Ce mode particulier d'application des émulsions selon l'invention peut être réalisé par ajustement des proportions d'émulsifiants et de solvants organiques utilisés.

Les microémulsions aqueuses selon l'invention peuvent être appliquées sur le bois pour le protéger contre les insectes et/ou les champignons suivant les procédés connus en soi, de préférence les procédés par enduction, par projection, par pulvérisation ou en utilisant des procédés d'imprégnation, par exemple, par trempage, par mise sous pression et/ou par mise sous vide.

L'invention sera mieux comprise à la lecture de la description qui va suivre et en particulier des tableaux I à IV illustrant les principales propriétés des composés utilisés selon l'invention seuls ou en association ainsi que des concentrés et microémulsions les contenant.

Ainsi, en correspondance avec la composition en poids des concentrés selon l'invention, ces tableaux I à IV indiquent la valeur de diverses propriétés physiques des concentrés et microémulsions aqueuses réalisées avec ces concentrés comme par exemple l'aspect des microémulsions, leur stabilité, leur pH.

7.

Ces tableaux montrent qu'il est possible, soit en variant la concentration de l'eau dans les micro-émulsions, soit en associant des émulsifiants anioniques, soit en variant les proportions, d'obtenir des micro-émulsions présentant des propriétés différentes.

Tableau I
Composition pondérale de quelques concentrés selon l'invention

| Constituants \ Exemples | 1 | 2 | 3 | 4 | 5 | 6 | 7 | 8 |
|---|---|---|---|---|---|---|---|---|
| Monobutyl éther de l'éthylèneglycol | 31 | | | | | | | |
| Monobutyl éther du diéthylèneglycol | | 12,3 | 11,3 | 16,8 | 23 | 21,5 | 28 | 22 |
| Xylène      Eb = 137-141°C | | | | | 10 | 9 | 10 | 8,6 |
| Résine alkyde diluable à l'eau | 10 | 15 | 15 | 15 | | | | |
| Résine dérivée de colophane, solide | | | | | 10 | | 10 | 10 |
| Résine dérivée de colophane, liquide | | | | | | 10 | | |
| Acide oléique | | 35 | | 28 | | | | 20 |
| Acides naphténiques | | | 35 | | | | | |
| Oléoylsarcoside | 30 | | | | 22 | 25 | 20 | |
| "Sapogenat T 180" (émulsifiant) (1) | | | | 7 | | | | 5 |
| Monoéthanolamine | 14 | 12,7 | 12,7 | 11,2 | 10 | 9,5 | 8 | 2,5 |
| Triéthylamine | | | 1 | | | | | |
| Hydroxyde de potassium en solution aqueuse à 50 % | | | | | | | | 7,9 |
| Pentachlorophénol | 13 | 20 | 20 | 20 | 20 | 20 | 20 | 20 |
| "ALDRIN" (2) | 2 | 5 | 5 | 2 | 5 | 2 | 4 | 4 |
| "LINDANE" (2) | | | | | | 3 | | |
| Poids total | 100 | 100 | 100 | 100 | 100 | 100 | 100 | 100 |

(1) - Le "Sapogenat T 180" est le tributylphénol oxyéthoxylé avec 18 moles
d'oxyde d'éthylène
(2) - Pesticides bien connus dans le métier

## Tableau II

### Composition pondérale et caractéristiques de quelques émulsions selon l'invention

| | 1 | 2 | 3 | 4 | 5 | 6 | 7 | 8 | 9 | 10 | 11 | 12 |
|---|---|---|---|---|---|---|---|---|---|---|---|---|
| N° du concentré utilisé | 1 | 2 | 3 | 3 | 4 | 5 | 6 | 6 | 7 | 7 | 8 | 8 |
| Poids en g du concentré utilisé | 10 | 10 | 20 | 10 | 20 | 10 | 10 | 20 | 10 | 20 | 10 | 20 |
| Poids en g de l'eau ajoutée | 90 | 90 | 80 | 90 | 80 | 90 | 90 | 80 | 90 | 80 | 90 | 80 |
| pH de l'émulsion obtenue | 9,8 | 8,9 | 8,7 | 8,9 | 9,0 | 9,3 | 8,2 | 8,8 | 8,2 | 8,8 | 8,2 | 7,9 |
| Aspect de l'émulsion obtenue | T | L | L | L | L | L | T | O/D | L/T | O/D | L/T | T/D |

0092457

0092457

10.

Dans ce tableau II, l'aspect des émulsions, déterminé après un repos de 24 heures à 20°C, a été codifié à l'aide des lettres suivantes :

L : transparent
T : translucide
L/T : transparent à translucide
0 : opaque
D : décanté
0/D : opaque et décanté
T/D : translucide et décanté.

## Tableau III

Composition pondérale de quelques concentrés selon l'invention

| Fonction des Constituants | Nature des constituants | Exemples | | | | | | | | | |
|---|---|---|---|---|---|---|---|---|---|---|---|
| | | 1 | 2 | 3 | 4 | 5 | 6 | 7 | 8 | 9 | 10 |
| Emulsifiants | Monobutyl éther du diéthylène-glycol | 17,4 | 9,4 | 18,8 | 18,8 | 14,6 | 10,40 | 8,4 | 10,40 | 21,2 | 23,7 |
| Coémulsifiants | Acide oléique | 5,3 | 8,0 | 16,0 | 16,0 | 12,4 | 8,9 | 7,1 | 8,9 | 17,9 | 20,0 |
| | Oléoylsarcoside | 12,0 | | 2,5 | | | | | | | |
| | Monoéthanolamine | 5,0 | 2,6 | 5,2 | 5,2 | 4,0 | 2,9 | 2,3 | 2,9 | 5,9 | 3,5 |
| | HOSTAPUR SAS 30 (1) | | | | | | 10,0 | 15,0 | 10,0 | | |
| Solvant | SHELLSOL A (2) | 5,3 | 2,5 | 5,0 | 5,0 | 4,0 | 2,8 | 2,2 | 2,8 | | |
| Résine de fixation | DERTOPOLINE P (3) | 8,0 | 4,0 | 8,0 | 8,0 | 8,0 | 8,0 | 8,0 | 8,0 | 8,0 | 8,0 |
| Tampon | Acide borique | | 5,0 | | | | | | | | |
| Neutralisant | Ammoniaque pure à 34 % | | 2,5 | | | 0,5 | 0,5 | 0,5 | | | 2,8 |

0092457

0092457

<u>Tableau III</u> (suite)

| Fonction des constituants | Nature des constituants | Exemples | | | | | | | | | |
|---|---|---|---|---|---|---|---|---|---|---|---|
| | | 1 | 2 | 3 | 4 | 5 | 6 | 7 | 8 | 9 | 10 |
| Séquestrant | AQUAMOLINE BC liquide (4) | 1,0 | 1,0 | 1,0 | 2,0 | 2,0 | 1,0 | 1,0 | 1,0 | 2,0 | 2,0 |
| | Eau | 20,0 | 54,5 | 17,5 | 24,0 | 33,5 | 34,5 | 34,5 | 35,0 | 24,0 | 19,0 |
| Pesticides | Pentachlorophénol (fongicide) | 20,0 | 7,5 | 15,0 | 15,0 | 15,0 | 15,0 | 15,0 | 15,0 | 15,0 | 15,0 |
| | ALDRIN (5) insecticides | 4,0 | 2,0 | 2,0 | 4,0 | 4,0 | 4,0 | 4,0 | 4,0 | 4,0 | 4,0 |
| | Hexachlorocyclohexane insecticides | 2,0 | 1,0 | 2,0 | 2,0 | 2,0 | 2,0 | 2,0 | 2,0 | 2,0 | 2,0 |
| | MERGAL HS 20 (5) | | | 2,0 | | | | | | | |
| | MERGAL HS 21 (5) (fongicide) | | | 5,0 | | | | | | | |

13.

1 - HOSTAPUR SAS 30 : sels de sodium d'acides alkanesulfoniques en $C_{13}-C_{18}$ en solution à 30 % en poids
dans l'eau.

2 - SHELLSOL A : hydrocarbure aromatique, E = 160-182°C,
d = 0,874

3 - DERTOPOLINE P : Colophane polymérisée estérifiée à la
pentaérythrite

4 - AQUAMOLINE BC liquide : sel tétrasodique de l'acide
éthylènediaminetétracétique

5 - Pesticides bien connus dans le métier.

### Tableau IV
Composition pondérale et caractéristiquesde quelques microémulsions selon l'invention

| | 1 | 2 | 3 | 4 | 5 | 6 | 7 | 8 |
|---|---|---|---|---|---|---|---|---|
| N° du concentré utilisé | 4 | 5 | 6 | 7 | 8 | 1 | 2 | 3 |
| Poids en g du concentré utilisé | 10 | 10 | 10 | 10 | 10 | 10 | 20 | 10 |
| Poids en g d'eau ajouté | 90 | 90 | 90 | 90 | 90 | 90 | 80 | 90 |
| Aspect immédiat | translucide | translucide | opaque | blanche laiteuse | opaque | translucide | translucide | translucide |
| pH de la microémulsion obtenue | 8,0 | 7,8 | 7,4 | 7,25 | 7,3 | 7,8 | 8,5 | 7,9 |
| Taille des particules après 24 heures | non observable | non observable | > 2,5 μ | > 6 μ | > 2 μ | non observable | non observable | non observable |
| Eclatement | excellent | excellent | excellent | bon | excellent | excellent | excellent | excellent |

0092457

15.

Le pH des émulsions a été déterminé après un repos de 24 heures à 20°C avec un pH mètre équipé d'une électrode de verre.

L'éclatement est un facteur montrant la facilité avec laquelle s'effectue la dispersion du concentré dans l'eau sous simple agitation manuelle. Cette propriété est appréciée après examen visuel de la microémulsion. De même, la stabilité de la microémulsion est appréciée par examen visuel.

Essais de stabilité au stockage des concentrés et microémulsions :

A - Essais de stabilité au stockage des concentrés :

Un échantillon de 10 g de concentré selon l'invention est soumis d'affilée à 5 cycles thermiques. Chaque cycle thermique se compose d'un séjour de 48 heures à $40 \pm 2°C$, puis d'un séjour de 48 heures à $0 \pm 2°C$, et enfin un séjour de 72 heures à $20 \pm 2°C$. En fin d'essai, on examine visuellement le concentré.

Sous ces conditions, le concentré n° 4 est resté homogène et limpide à toutes températures sans jamais présenter de dépôt.

B - Essais de stabilité au stockage des microémulsions :

Un échantillon de 10 g d'une microémulsion selon l'invention est soumise d'affilée à 5 cycles thermiques. Chaque cycle thermique se compose d'un séjour de 15 heures à $- 10 \pm 2°C$ suivi d'un séjour de 9 heures à $20 \pm 2°C$. Lors du séjour à $- 10°C$, la microémulsion testée se prend en masse, puis au dégel en début du séjour à $+20°C$, on observe une séparation de phase à laquelle il est facile de remédier par une simple agitation manuelle.

Sous ces conditions, la microémulsion n° 1 a conservé le même aspect et son pH n'a pas varié.

Il va de soi que la présente invention n'a été décrite qu'à titre purement explicatif et nullement limitatif et que toute modification utile pourra y être apportée sans sortir de son cadre.

16.

REVENDICATIONS

1. Concentré d'agents de protection du bois destiné à la fabrication de microémulsions du type huile dans l'eau utilisables pour la protection et/ou pour la conservation du bois, caractérisé en ce qu'il comprend pondéralement :

- de 10 à 50 % d'au moins un pesticide connu constitué nécessairement d'un mélange en proportions variables d'au moins un insecticide connu insoluble dans l'eau et d'au moins un fongicide connu soluble ou insoluble dans l'eau et

- au moins 20 % d'une composition émulsifiante constituée, pour une partie principale (supérieure à 55 %), par au moins un émulsifiant anionique connu appartenant à la classe des sels d'acides carboxyliques en $C_{10}$ et plus et, pour une partie secondaire (inférieure à 45 %) d'au moins un coémulsifiant miscible à l'eau, appartenant à la classe des éthers de polyols tels que l'éther monobutylique de l'éthylèneglycol, l'éther monobutylique du diéthylèneglycol.

2. Concentré selon la revendication 1, caractérisé par le fait qu'il comprend pondéralement :

- de 10 à 50 % d'au moins un pesticide tel que défini à cette revendication :

- au moins 45 % de ladite composition émulsifiante

- le complément à 100 % comprenant au moins un additif habituel à ce type de concentré choisi parmi les suivants : résines de fixation, eau, solvants organiques, bases minérales ou organiques, colorants, plastifiants, complexants.

3. Concentré selon la revendication 1 ou 2, caractérisé par le fait que ladite composition émulsifiante renferme pondéralement :

- au moins 40 % d'au moins un émulsifiant anionique connu appartenant à la classe des sels d'acides carboxyliques en $C_{10}$ et plus ;

17.

- au moins 10 % d'au moins un coémulsifiant miscible à l'eau appartenant à la classe des éthers de polyols.

4. Concentré selon la revendication 1, caractérisé par le fait qu'il comprend pondéralement :

- de 10 à 50 % d'au moins un pesticide tel que défini à cette revendication ;

- au moins 20 % de ladite composition émulsifiante ;

- au moins 10 % d'eau et

- au moins 0,5 % d'au moins une résine de fixation en plus desdits additifs habituels.

5. Concentré selon la revendication 4, caractérisé par le fait que ladite composition émulsifiante comprend pondéralement :

- au moins 20 % d'au moins un émulsifiant anionique connu appartenant à la classe des sels d'acides carboxyliques en $C_{10}$ et plus et

- au moins 10 % d'au moins un coémulsifiant miscible à l'eau appartenant à la classe des éthers de polyols.

6. Concentré selon l'une quelconque des revendications 1 à 5, caractérisé par le fait que l'émulsifiant ou le mélange d'émulsifiants anioniques est choisi parmi les sels d'alcanolamine.

7. Concentré selon la revendication 6, caractérisé par le fait que l'alcanolamine est la monoéthanolamine.

8. Concentré selon l'une quelconque des revendications 1 à 7, caractérisé par le fait que l'un des émulsifiants anioniques est un sel de l'acide oléique.

9. Concentré selon l'une quelconque des revendications 1 à 7, caractérisé par le fait que l'un des émulsifiants anioniques est un sel de la N-oléoylsarcosine.

10. Concentré selon l'une quelconque des revendications 1 à 7, caractérisé par le fait que l'un des émulsifiants anioniques est un sel d'acides naphténiques en $C_{10}$ et plus.

18.

11. Concentré selon l'une quelconque des revendications 1 à 7, caractérisé par le fait que la résine de fixation est choisie dans le groupe comprenant l'amidon, la carboxyméthylcellulose, la colophane, les esters de colophane, la gomme arabique, l'alcool polyvinylique, l'acide humique, les résines glycérolphtaliques, les résines dites d'hydrocarbures composées de bas polymères d'hydrocarbures insaturés aliphatiques et/ou aromatiques issus de craquage de fractions pétrolières riches en indène.

12. Microémulsions aqueuses de type huile dans l'eau utilisables pour la protection et/ou la conservation du bois, caractérisées par le fait qu'elles sont obtenues par dilution à l'eau dans un rapport pondéral respectif de 5/95 à 30/70 d'un concentré selon l'une quelconque des revendications 1 à 11.

13. Microémulsions aqueuses selon la revendication 12, caractérisées en ce qu'elles présentent un aspect transparent à translucide.

0092457

Office européen
des brevets

**RAPPORT DE RECHERCHE EUROPEENNE**

Numéro de la demande

EP  83 40 0692

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| P,X | RESEARCH DISCLOSURE, no. 217, mai 1982, page 135, no. 21705, Havant, Hampshire, GB. "Wood preservation" * Article en entier * | 1-3,8-10,12,13 | B 27 K    4/50 A 01 N   25/04 |
| | --- | | |
| P,X | EP-A-0 057 153   (XYLOCHIMIE) * Page  7, lignes 16-32; page 8, lignes   17-24;   revendications 1,3,7,10,11 * | 1-4,11-13 | |
| | --- | | |
| X | GB-A-  560 694  (STAFFORD ALLEN & SONS) * En entier * | 1-3,6 | |
| | --- | | |
| X | US-A-3 281 318  (R.E. STUTZ) *   Colonne   2,   lignes   21-62; colonne  3, ligne 10 - colonne 4, ligne 3; colonne 4, lignes 35-56; revendications 4,10* | 1-3,6,7 | DOMAINES TECHNIQUES RECHERCHES (Int. Cl. ³) A 01 N B 27 K |
| A | | 5 | |
| | --- | | |
| A | US-A-3 298 913  (K.F. STEWART) * Colonne 3, ligne 7 - colonne 4, ligne   49;   colonne   5,   lignes 56-75; revendications * | 1,2,3,5,6,8 | |
| | ----- | | |

Le présent rapport de recherche a été établi pour toutes les revendications

| Lieu de la recherche LA HAYE | Date d'achèvement de la recherche 24-06-1983 | Examinateur FLETCHER A.S. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82